# EUROPÄISCHE PATENTSCHRIFT

(11) **EP 0 686 675 B1**
(45) Veröffentlichungstag und Bekanntmachung des Hinweises auf die Patenterteilung: **04.02.1998**
(21) Anmeldenummer: 95107903.7
(22) Anmeldetag: 24.05.1995
(51) Int. Cl.: C09C 1/00, B41M 3/14

(54) **Magnetisierbare mehrfach beschichtete metallische Glanzpigmente**
Magnetizable brilliant metallic pigments bearing multiple coatings
Pigments métalliques brillants magnétisables à revêtements multiples

(30) Priorität: 01.06.1994 DE 4419173
(43) Veröffentlichungstag der Anmeldung: 13.12.1995
(73) Patentinhaber: BASF Aktiengesellschaft, 67063 Ludwigshafen (DE)
(72) Erfinder: Schmid, Raimund, Dr., D-67435 Neustadt (DE); Mronga, Norbert, Dr., D-69221 Dossenheim (DE)

(56) Entgegenhaltungen:
- EP-A- 0 571 836
- EP-A- 0 622 425
- EP-A- 0 655 486
- CHEMICAL ABSTRACTS, vol. 114, no. 6, 11.Februar 1991 Columbus, Ohio, US; abstract no. 45985p, Seite 174; & JP-A-02 015 176

## Beschreibung

Die vorliegende Erfindung betrifft neue magnetisierbare Glanzpigmente auf der Basis von mehrfach beschichteten plättchenförmigen nichtferromagnetischen metallischen Substraten mit
A) einer ersten, ferromagnetischen Schicht, die Eisen, Cobalt, Nickel, Magnetit und/oder γ-Fe₂O₃ enthält,
B) einer zweiten, im wesentlichen aus Siliciumoxid, Siliciumoxidhydrat, Aluminiumoxid und/oder Aluminiumoxidhydrat bestehenden Schicht,
C) einer dritten, im wesentlichen aus Metall und/oder nichtselektiv absorbierendem Metalloxid bestehenden Schicht und
D) gewünschtenfalls einer vierten, im wesentlichen aus farblosem oder selektiv absorbierendem Metalloxid bestehenden Schicht.

Außerdem betrifft die Erfindung Mischungen dieser Pigmente (I) mit mehrfach beschichteten silikatischen Plättchen (II), die mit einer inneren, farblosen oder selektiv absorbierenden Metalloxidschicht belegt sind und
A') eine ferromagnetische Schicht, die Eisen, Cobalt, Nickel, Magnetit und/oder γ-Fe₂O₃ enthält, und
B') gewünschtenfalls eine im wesentlichen aus farblosem oder selektiv absorbierendem Metalloxid bestehende Schicht
aufweisen.

Weiterhin betrifft die Erfindung die Herstellung dieser Pigmente sowie ihre Verwendung zum Einfärben von Lacken, Druckfarben, Tinten, Kunststoffen, Gläsern, keramischen Produkten und Zubereitungen der dekorativen Kosmetik, wobei die Einwirkung eines Magnetfelds während oder nach der Applikation im noch flüssigen Anwendungsmedium zu interessanten dreidimensionalen Effekten führt.

Glanz- oder Effektpigmente werden in zunehmendem Maße in vielen Bereichen der Technik eingesetzt, beispielsweise in Automobillacken, in der dekorativen Beschichtung, der Kunststoffeinfärbung, in Anstrich-, Druck-, insbesondere Sicherheitsdruckfarben sowie in der Kosmetik.

Ihre optische Wirkung beruht auf der gerichteten Reflexion von Licht an überwiegend flächig ausgebildeten, zueinander parallel ausgerichteten, metallischen oder stark lichtbrechenden Pigmentteilchen. Je nach Zusammensetzung der Pigmentplättchen erzeugen Interferenz-, Reflexions- und Absorptionsphänomene winkelabhängige Farb- und Helligkeitseindrücke.

Voraussetzung für die gerichtete Reflexion ist die Ausrichtung der plättchenförmigen Pigmente im Anwendungsmedium. Bei Lacken und Druckfarben erfolgt diese Ausrichtung in der Regel durch Fließvorgänge innerhalb des Bindemittels während der Applikation. Schrumpfungsprozesse, die beispielsweise beim Trocknen von dünnen Lackfilmen auftreten, verbessern die gleichmäßige Ausrichtung der Pigmentplättchen noch zusätzlich.

Jedoch können durch unterschiedliche Pigmentorientierungen in verschiedenen Bereichen des Anwendungsmediums auch besondere optische Effekte erreicht werden. So sind beispielsweise bei der Einfärbung von Kunststoffen im Spritzgußverfahren Fließlinien zu beobachten, die durch unterschiedlich orientierte Pigmentplättchen sichtbar gemacht werden.

Interessante dreidimensionale optische Effekte ergeben sich z.B. bei Verwendung magnetisierbarer Pigmentplättchen durch Einwirkung von Magnetfeldern während oder nach der Applikation im noch flüssigen Anwendungsmedium. Magnetisierbare Glanzpigmente sind daher für eine Reihe von Anwendungen wie den Sicherheitsdruck, wo sie z.B. auch als Ersatz für kostspielige Hologramme eingesetzt werden können, als magnetisch lesbare Codes oder für künstlerische und dekorative Zwecke von besonderem Interesse.

In den nicht vorveröffentlichten DE-A-43 13 541 und DE-A-43 40 141 werden magnetisierbare Glanzpigmente auf der Basis von nichtferromagnetischen metallischen Substraten, insbesondere Aluminiumplättchen, die mit ferromagnetischen, Eisen, Cobalt, Nickel oder γ-Fe₂O₃ enthaltenden Schichten und zusätzlichen, nichtferromagnetischen Metalloxidschichten und/oder passivierenden Schichten belegt sind, sowie auch Mischungen der mit γ-Fe₂O₃ beschichteten Pigmente mit in ähnlicher Weise beschichteten silikatischen Plättchen beschrieben.

Diese Pigmente lassen sich in applizierter Form unter dem Einfluß eines Magnetfeldes hervorragend unter Ausbildung dreidimenionaler Strukturen ausrichten. Jedoch werden hier nur Hell/Dunkel-Effekte sowie das Umkippen der jeweiligen Interferenzfarbe nach Unbunt beobachtet.

In der älteren deutschen Patentanmeldung DE-A- 44 05 492 werden besonders farbstarke metallische Glanzpigmente beschrieben, die mit silicium- und/oder aluminiumoxidhaltigen sowie metallischen Schichten belegt sind, die jedoch in der Regel, insbesondere wenn sie intensive Interferenzfarben zeigen, keinen für eine räumliche Orientierung ausreichenden Magnetismus aufweisen. Zu geringer Magnetismus kann auch physikalisch nicht detektiert werden und somit nicht als zusätzliches Sicherheitsmerkmal dienen.

Der Erfindung lag daher die Aufgabe zugrunde, magnetisierbare Glanzpigmente mit vorteilhaften Anwendungseigenschaften, insbesondere auch interessanten koloristischen Eigenschaften, bereitzustellen.

Demgemäß wurden die eingangs definierten magnetisierbaren Glanzpigmente und ihre Mischungen mit mehrfach beschichteten silikatischen Plättchen gefunden.

Als besonders bevorzugte Variante wurden Glanzpigmente auf der Basis von mehrfach beschichteten, im wesentlichen aus Aluminium bestehenden, plättchenförmigen Substraten mit
A) einer ersten, 10 bis 500 nm dicken, im wesentlichen aus Eisen und/oder Magnetit bestehenden, ferromagnetischen Schicht,
B) einer zweiten, 50 bis 600 nm dicken, im wesentlichen aus Siliciumoxid und/oder Siliciumoxidhydrat bestehenden Schicht,
C) einer dritten, 1 bis 25 nm dicken, im wesentlichen aus Molybdän, Chrom, Wolfram und/oder Eisen bestehenden Schicht und
D) gewünschtenfalls einer vierten, 5 bis 250 nm dicken, im wesentlichen aus Siliciumoxid, Siliciumoxidhydrat, Aluminiumoxid und/oder Aluminiumoxidhydrat bestehenden Schicht
gefunden.

Weiterhin wurde ein Verfahren zur Herstellung der Glanzpigmente gefunden, welches dadurch gekennzeichnet ist, daß man die metallischen Substratteilchen nacheinander mit den einzelnen Schichten belegt,
wobei man
die im wesentlichen metallischen Schichten ((A) und/oder (C)) durch Gasphasenzersetzung flüchtiger Metallverbindungen in einer inerten Atmosphäre oder durch stromlose, naßchemische Metallabscheidung und gegebenenfalls anschließende Trocknung, die im wesentlichen aus Siliciumoxid, Siliciumoxidhydrat, Aluminiumoxid und/oder Aluminiumoxidhydrat bestehenden Schichten (B) durch hydrolytische Zersetzung von organischen Silicium- und/oder Aluminiumverbindungen, bei denen die organischen Reste über Sauerstoffatome an die Metalle gebunden sind, in Gegenwart eines organischen Lösungsmittels, in welchem die Metallverbindungen löslich sind, und gegebenenfalls anschließende Trocknung,
die im wesentlichen aus nichtselektiv absorbierendem Metalloxid bestehenden Schichten ((A) und/oder (C)) durch Gasphasenzersetzung flüchtiger Metallverbindungen in Gegenwart von Sauerstoff und/oder Wasserdampf,
die im wesentlichen aus γ-Fe₂O₃ bestehenden Schichten (A) durch Gasphasenzersetzung von Eisencarbonyl in Gegenwart von Wasserdampf und/oder Sauerstoff unter Bildung einer im wesentlichen Magnetit enthaltenden Schicht und anschließendes Erhitzen in einer oxidierenden Atmosphäre oder durch Gasphasenzersetzung von Eisencarbonyl in Gegenwart von Sauerstoff und/oder Wasserdampf unter Bildung einer im wesentlichen α-Fe₂O₃ enthaltenden Schicht, deren Umwandlung in eine eisen(II)haltige Schicht durch Erhitzen in einer reduzierenden Atmosphäre und anschließendes Erhitzen in einer oxidierenden Atmosphäre und
die im wesentlichen aus farblosem oder selektiv absorbierendem Metalloxid bestehenden Schichten (D) durch Gasphasenzersetzung flüchtiger Metallverbindungen in Gegenwart von Sauerstoff und/oder Wasserdampf oder durch hydrolytische Zersetzung organischer Metallverbindungen, bei denen die organischen Reste über Sauerstoffatome an die Metalle gebunden sind, in Gegenwart eines organischen Lösungsmittels, in welchem die Metallverbindungen löslich sind, und anschließende Trocknung aufbringt.

Nicht zuletzt wurde ein Verfahren zur Einfärbung von Lacken, Druckfarben, Tinten, Kunststoffen, Gläsern, keramischen Produkten und Zubereitungen der dekorativen Kosmetik gefunden, welches dadurch gekennzeichnet ist, daß man hierfür die erfindungsgemäßen Glanzpigmente oder Glanzpigmentmischungen verwendet.

Außerdem wurde eine besondere Ausführungsform dieses Verfahrens gefunden, welche dadurch gekennzeichnet ist, daß man die Glanzpigmente während oder nach der Applikation im noch flüssigen Anwendungsmedium einem Magnetfeld aussetzt.

Für die erfindungsgemäßen Pigmente sind als Substrat alle nichtferromagnetischen, für Metalleffektpigmente bekannten Metalle und Legierungen in Plättchenform geeignet. Z.B. kommen neben Stahl, Kupfer und seinen Legierungen wie Messing und Bronzen vor allem Aluminium und seine Legierungen wie Aluminiumbronze in Betracht.

Bevorzugt sind Aluminiumflakes, die in einfacher Weise durch Herausstanzen aus Aluminiumfolie oder nach gängigen Verdüsungs- und Mahltechniken herzustellen sind.

So sind beispielsweise Aluminiumpigmente geeignet, die nach dem sogenannten Hall-Verfahren in Testbenzin durch Naßmahlung hergestellt werden. Ausgangsmaterial ist ein atomisierter, spratziger Aluminiumgrieß, welcher in Kugelmühlen in Testbenzin und in Gegenwart eines Schmiermittels zu plättchenförmigen Teilchen verformt bzw. zerkleinert und anschließend klassiert wird.

Es können handelsübliche Produkte eingesetzt werden. Jedoch sollte die Oberfläche der Aluminiumteilchen weitgehend frei von Fetten oder anderen Belegmitteln sein. Diese Substanzen können zum Teil durch Lösungsmittelbehandlung oder besser, wie in der DE-A-42 23 384 beschrieben, durch oxidative Behandlung entfernt werden.

Die Größe der Substratteilchen ist an sich nicht kritisch und kann auf den jeweiligen Anwendungszweck abgestimmt werden. In der Regel haben die Teilchen mittlere größte Durchmesser von etwa 1 bis 200 µm, insbesondere etwa 5 bis 100 µm, und Dicken von etwa 0,1 bis 5 µm, insbesondere um etwa 0,5 µm. Ihre spezifische freie Oberfläche (BET) beträgt im allgemeinen 0,1 bis 5 m²/g.

Die erfindungsgemäßen Glanzpigmente zeichnen sich durch eine Mehrfachbeschichtung des metallischen Substrats aus.

Die erste Schicht (A) ist ferromagnetisch und enthält Eisen, Cobalt, Nickel, Magnetit und/oder γ-Fe₂O₃ (Maghemit).

Die Dicke der Schicht (A) ist nicht kritisch und kann, der gewünschten Magnetisierbarkeit der Glanzpigmente entsprechend, eingestellt werden. In der Regel wird die ferromagnetische Schicht (A) etwa 10 bis 500 nm, vorzugsweise 20 bis 200 nm dick sein.

Die zweite Schicht (B) ist aus Aluminiumoxid, Aluminiumoxidhydrat, Siliciumoxidhydrat und bevorzugt Siliciumoxid sowie auch aus deren Mischungen aufgebaut.

Die Dicke der Schicht (B) beträgt im allgemeinen 1 bis 800 nm, bevorzugt 50 bis 600 nm. Da die Schicht (B) im wesentlichen den Farbton der erfindungsgemäßen Pigmente bestimmt, hat die Schicht (B) für die ein besonders ausgeprägtes Farbenspiel zeigenden und daher auch bevorzugten erfindungsgemäßen Glanzpigmente eine Mindestschichtdicke von etwa 70 nm.

Mit wachsender Schichtdicke von (B) durchläuft man bei den mit der Schicht (B) und der schwarzen Schicht (C) belegten Pigmenten bei einem Betrachtungswinkel von 25° mehrmals nacheinander die Interferenzfarben blau, grün, gold, rot. Die Winkelabhängigkeit des Farbtons nimmt von der ersten Interferenzfarbenserie nach höheren Serien (also dicker werdenden Schichten (B)) zu. So kippt beispielsweise ein rötlicher Goldton der ersten Serie winkelabhängig ab in ein grünliches Gold, während ein solcher Farbton aus der zweiten oder dritten Interferenzserie in die Komplementärfarbe, ein grünstichiges Blau, umschlägt.

Diese Farbeffekte werden bei einer im wesentlichen nichtselektiv absorbierenden Schicht (A), die das metallisch glänzende Substrat farblich kaum verändert, praktisch nur durch die Dicke der Schicht (B) bestimmt, während im wesentlichen aus γ-Fe₂O₃ bestehende Schichten (A) aufgrund ihrer Transparenz und ihrer selektiven Absorption eine vorteilhafte Modifizierung insbesondere solcher Pigmente bewirken, die aufgrund entsprechender Schichtdicken von (B) ein Farbenspiel mit goldenen Farbtönen zeigen.

Die dritte, nichtselektiv absorbierende Schicht (C) besteht im wesentlichen aus Metallen, bevorzugt solchen, die durch Gasphasenzersetzung flüchtiger Verbindungen aufgebracht werden können, wie vor allem Molybdän, Wolfram, Chrom, auch Cobalt und Nickel oder Gemische dieser Metalle, oder schwarzen Metalloxiden wie vor allem Magnetit, auch Nickeloxid, Cobaltoxid (CoO, Co₃O₄) und Vanadiumoxid (VO₂, V₂O₃) sowie deren Mischungen, beispielsweise Eisen und Magnetit.

Weiterhin sind auch solche Metalle, die sich naßchemisch durch Reduktion aus Metallsalzlösungen abscheiden lassen, für die Schicht (C) geeignet. Als Beispiele seien Silber, Kupfer, Gold, Palladium und Platin sowie auch Cobalt und Nickel und Legierungen wie NiP, NiB, NiCo, NiWP, CoP und AgAu genannt.

Die schwarze Schicht (C) darf nicht deckend sein, sondern muß für Licht teilweise durchlässig sein. Auf diese Weise senkt sie den Weißsockel des auftreffenden und reflektierenden Lichtes ab und bewirkt so eine Verstärkung der kaum sichtbaren Interferenzfarbe des mit Metalloxid beschichteten Substrates.

Je nach den optischen Eigenschaften des Schichtmaterials (C) betragen die Schichtdicken im allgemeinen 1 bis 100 nm. Bei stark absorbierenden, hochbrechenden Materialien wie Molybdän oder Chrom ist in der Regel eine Schichtdicke von 1 bis 25 nm ausreichend, um den gewünschten Effekt einzustellen. Schwächer absorbierende oder niedriger brechende Materialien wie Magnetit erfordern dickere Schichten von etwa 10 bis 50 nm.

Wenn die Schicht (C) aus ferromagnetischen Metallen oder Metalloxiden aufgebaut ist, wird auch diese Schicht eine gewisse Magnetisierbarkeit des Glanzpigments bewirken. Diese wird jedoch in der Regel nicht groß genug sein, um zu einer wirksamen Ausrichtung des Pigments unter dem Einfluß eines Magnetfeldes zu führen, da die Schichtdicken (C), die zur Einstellung der gewünschten Koloristik erforderlich sind, zu gering sind.

Insbesondere im Sicherheitsdruck wird die physikalische Detektierbarkeit des Magnetismus als zusätzliches Sicherheitsmerkmal gewünscht. Auch aus diesem Grund müssen die eingesetzten Pigmente ausreichende Mengen magnetisierbaren Materials enthalten, ohne dadurch Einbußen in der Koloristik aufzuweisen.

Die erfindungsgemäßen Glanzpigmente haben den großen Vorteil, daß ihre magnetischen und ihre optischen Eigenschaften unabhängig voneinander durch die Schicht (A) einerseits und das Schichtsystem (B) + (C) andererseits gezielt eingestellt werden können.

Die neuen Glanzpigmente zeigen also erstmals sowohl Magnetisierbarkeit als auch Farbwechsel zwischen intensiven Interferenzfarben, die bei einem gegebenen Betrachtungswinkel je nach der magnetischen Ausrichtung ortsabhängig im Anwendungsmedium zu beobachten sind.

Weiterhin können die erfindungsgemäßen Glanzpigmente noch eine vierte Schicht (D) aufweisen, die aus farblosen oder selektiv absorbierenden Metalloxiden aufgebaut ist. Bevorzugt sind z.B. Aluminiumoxid, -oxidhydrat, Zirkon-, Titan-, Zinn-, Eisen- und Chromoxid und besonders bevorzugt Siliciumoxid und -oxidhydrat.

Diese Deckschicht bewirkt insbesondere bei metallischen Schichten (C) eine deutliche Verbesserung der Beständigkeit gegen Umwelteinflüsse.

Die Dicke der Schicht (D) ist an sich nicht kritisch, im allgemeinen beträgt sie etwa 1 bis 400 nm, insbesondere 5 bis 250 nm.

Selbstverständlich kann auch die Schicht (D) zur Interferenz des Pigmentes beitragen und dabei die Interferenzenreihe an der durch das mit (B) und (C) beschichtete Substrat bestimmten Stelle fortsetzen. Dies ist beispielsweise der Fall, wenn Zirkon- oder Titanoxid als Schicht (D) aufgebracht werden. Besteht dagegen die Schicht (D) im wesentlichen aus Siliciumoxid, so wird sich diese Schicht im Anwendungsmedium (z.B. Lacken, Druckfarben oder Tinten), das einen ähnlichen Brechungsindex aufweist, koloristisch kaum bemerkbar machen.

Farbige Metalloxide wie Eisen- und Chromoxid werden schließlich die Interferenzfarbe des Mehrschichtsystems durch Beimischen ihrer Absorptionsfarbe modifizieren und mit zunehmender Schichtdicke schließlich überdecken.

Eine aufgrund ihrer hohen Farbstärke besonders bevorzugte Ausführungsform der erfindungsgemäßen Glanzpigmente stellen mit (A) Eisen und/oder Magnetit, (B) Siliciumdioxid, (C) Molybdän, Chrom, Wolfram und/oder Eisen und gewünschtenfalls wiederum Siliciumdioxid, Siliciumoxidhydrat, Aluminiumoxid und/oder Aluminiumoxidhydrat (D) beschichtete Aluminiumplättchen dar, wobei die Dicken der einzelnen Schichten vorzugsweise 10 bis 100 nm (A), 50 bis 600 nm (B), 1 bis 25 nm, insbesondere 1 bis 20 nm (C) und 5 bis 250 nm (D) betragen. Ganz besonders bevorzugte Glanzpigmente weisen eine im wesentlichen aus Molybdän bestehende Schicht (C) auf.

Insgesamt zeichnen sich bei den erfindungsgemäßen Glanzpigmenten alle Schichten durch ihren gleichmäßigen, homogenen und filmartigen Aufbau und ihre Fähigkeit zur Interferenz auch der dickeren Schichten aus, so daß kräftige Interferenzfarben zeigende Mehrschichtsysteme entstehen.

Aus koloristischen Gründen sind Mischungen der erfindungsgemäßen metallischen Pigmente (I) mit mehrfach beschichteten silikatischen Plättchen (II) von besonderem Interesse.

Als silikatische Substrate kommen dabei insbesondere helle bzw. weiße Glimmer in Betracht, wobei Schuppen von vorzugsweise naß vermahlenem Muskovit besonders bevorzugt sind. Selbstverständlich sind auch andere natürliche Glimmer wie Phlogopit und Biotit, künstliche Glimmer, Talk- und Glasschuppen geeignet.

Die silikatischen Substratteilchen weisen eine innere Metalloxidschicht auf, die vorzugsweise aus hochbrechenden Metalloxiden wie Titan-, Zirkon-, Zink-, Zinn-, Chrom-, Eisenoxid und/oder Bismutoxychlorid aufgebaut ist. Aluminium- und Siliciumoxid können ebenfalls enthalten sein.

Besonders bevorzugt sind Glimmerpigmente, bei welchen diese innere Metalloxidschicht im wesentlichen aus Titandioxid besteht und die weiteren genannten Oxide höchstens in untergeordneter Menge enthält.

Metalloxidbeschichtete silikatische Pigmente sind allgemein bekannt und auch unter den Bezeichnungen Iriodin® (Merck, Darmstadt), Flonac® (Kemira Oy, Pori) oder Mearlin® (Mearl Corporation, New York) im Handel.

Die silikatischen Pigmente sind, um eine ausreichende Magnetisierbarkeit der Pigmentmischung zu gewährleisten, vorteilhaft ebenfalls mit einer ferromagnetischen Schicht (A'), die Eisen, Cobalt, Nickel, Magnetit und/oder γ-Fe₂O₃ enthält, belegt.

Gewünschtenfalls kann zum Schutz der Schicht (A') noch eine Deckschicht (B'), die im wesentlichen aus farblosem oder selektiv absorbierendem Metalloxid besteht, aufgebracht werden.

Die Schichten (A') und/oder (B') können dabei wie die entsprechenden Schichten (A) und (B) der Metallpigmente oder verschieden von diesen aufgebaut sein.

Durch geeignete Wahl der silikatischen Pigmente (II) kann das Farbenspiel der Metallpigmente (I) variiert oder ergänzt werden.

Die Zusammensetzung der erfindungsgemäßen Glanzpigmentmischungen wird von der gewünschten Koloristik bestimmt.

Prinzipiell kann das Gewichtsverhältnis metallisches Pigment (I): silikatisches Pigment (II) von 1:99 bis 99:1 variiert werden. Um ein ausreichendes Deckvermögen zu erreichen, enthalten die erfindungsgemäßen Pigmentmischungen vorzugsweise mindestens 5 Gew.-% metallisches Glanzpigment (I).

Der bevorzugte Weg zur Herstellung der erfindungsgemäßen Pigmentmischungen ist die gemeinsame Beschichtung der metallischen und der metalloxidbeschichteten silikatischen Plättchen mit den Schichten (A) und gewünschtenfalls (B).

Selbstverständlich können jedoch auch alle Schichten getrennt aufgebracht werden und die beschichteten Pigmente dann anschließend gemischt werden. Bei dieser Vorgehensweise kann die Beschichtung der metallischen und der silikatischen Teilchen variiert werden.

Bei dem erfindungsgemäßen Herstellungsverfahren werden die Schichten (A), (C) und gegebenenfalls (D) vorzugsweise, wie in der EP-A-571 836 und der nicht vorveröffentlichten DE-A-43 40 141 beschrieben, über Gasphasenzersetzung flüchtiger Metallverbindungen (chemical vapor deposition, CVD) auf die Substratteilchen aufgebracht.

Hierfür wird zweckmäßigerweise ein beheizbarer Wirbelschichtreaktor, wie er beispielsweise in der EP-A-33 457 oder der DE-A-38 13 335 beschrieben ist, verwendet, in dem die Substratteilchen zunächst mit einem Wirbelgas fluidisiert und auf die für die Zersetzung der jeweiligen Metallverbindung erforderliche Temperatur von in der Regel 70 bis 350°C erhitzt werden. Die in einem vorgeschalteten Verdampfergefäß unter Verwendung eines geeigneten Trägergases verdampften Metallverbindungen sowie die gegebenenfalls zur Zersetzung benötigten Gase werden dann über getrennte Düsen eingetragen.

Metallische Schichten (A) (und (C)) werden dabei bevorzugt durch inerte Zersetzung von Metallcarbonylen, wie Eisenpentacarbonyl, Chrom-, Molybdän-, Wolframhexacarbonyl, Nickeltetracarbonyl und Dicobaltoctacarbonyl, aufgebracht (bei der Zersetzung von Mo(CO)₆ sind z.B. Temperaturen von 200 bis 250°C bevorzugt).

Gemischte Metallschichten (C), die z.B. im wesentlichen aus Molybdän und Chrom bestehen, können durch gleichzeitige oder durch aufeinanderfolgende Gasphasenbeschichtung aufgebracht werden. Die zweite Variante bietet sich insbesondere bei dünnen Schichten (C) an, da eine weitgehende Durchmischung der abgeschiedenen Schichten erfolgt.

Soll die ferromagnetische Schicht (A) aus Magnetit (oder die schwarze Schicht (C) aus niederen Metalloxiden, wie Magnetit, VO₂ oder V₂O₃) bestehen, dann werden zweckmäßigerweise die Metallcarbonyle wie Eisenpentacarbonyl oder Oxychloride wie Vanadinoxychlorid mit Wasserdampf und/oder Sauerstoff zersetzt. Werden bei dieser Gasphasenzersetzung zunächst höhere Metalloxide, beispielsweise V₂O₅, abgeschieden, so müssen diese anschließend z.B. mit Wasserstoff oder Ammoniak zum gewünschten Oxid reduziert werden.

Die metallischen und/oder aus niederen Metalloxiden bestehenden Schichten (A) (und (C)) werden nach beendeter Beschichtung, insbesondere im Fall einer die äußere Schicht des Glanzpigmentes bildenden Schicht (C), zweckmäßigerweise an der Oberfläche passiviert. Das kann in einfacher Weise geschehen, indem den Wirbelgasen bei der Abkühlung etwas Luft zugemischt wird.

Metallische Schichten (C) können aber auch naßchemisch durch Reduktion aus geeigneten Metallsalzlösungen aufgebracht werden. Auf diese Weise können vor allem edlere Metalle wie Kupfer, Silber, Gold, Cobalt, Nickel, Palladium und Platin abgeschieden werden. Wie in der EP-A-353 544 beschrieben, eignen sich hierfür eine Reihe von Reduktionsmitteln, insbesondere milde organische Reduktionsmittel wie Glucose und Formaldehyd.

Zum Aufbau der metallischen Schichten (C) eignen sich auch Metallegierungen wie NiP, NiB, NiCo, NiWP, CoP und AgAu, die ebenfalls naßchemisch (z.B. durch Reaktion einer Metallsalzlösung mit Hypophospit) aufzubringen sind (EP-A-313 281).

In der Regel werden jedoch die über die Gasphase aufgebrachten Metallschichten aufgrund ihrer höheren Qualität (feiner kristallin, filmartig) den naßchemisch aufgebrachten vorzuziehen sein, da sie meist brillantere und farbstärkere Glanzpigmente ergeben.

Soll die ferromagnetische Schicht (A) im wesentlichen γ-Fe₂O₃ enthalten, so kann diese Schicht, wie in der nicht vorveröffentlichten DE-A-43 40 141 beschrieben, auf verschiedene Weise aufgebracht werden.

Bei der einen Variante wird zunächst (vorzugsweise durch Zersetzung von Eisenpentacarbonyl in Gegenwart von Wasserdampf) eine im wesentlichen magnetithaltige Schicht (A) abgeschieden, die anschließend durch Erhitzen in Gegenwart von Luft oder anderen Sauerstoff/Inertgas-Gemischen auf üblicherweise 100 bis 600°C, bevorzugt 180 bis 400°C, besonders bevorzugt 200 bis 350°C in die gewünschte γ-Fe₂O₃-haltige Schicht überführt wird (Oxidationsdauer etwa 8 bis 24 h, Aufheizraten im allgemeinen 10 bis 100°C/h).

Bei der anderen Variante wird zunächst durch Oxidation von Eisenpentacarbonyl eine im wesentlichen aus α-Fe₂O₃ bestehende Schicht aufgebracht, die dann durch Erhitzen in einer reduzierenden Atmosphäre (vorteilhaft in Gegenwart von z.B. Kohlenmonoxid oder besonders Wasserstoff, aber auch deren Mischungen) auf in der Regel 200 bis 600°C, vorzugsweise 200 bis 400°C (Reduktionsdauer etwa 8 bis 24 h, Aufheizraten im allgemeinen 10 bis 50°C/h) in eine eisen(II)haltige, im wesentlichen Eisen(II)oxid, Magnetit und Eisen enthaltende Schicht umgewandelt wird. Diese Schicht kann anschließend dann, wie bei der ersten Variante beschrieben, zu der gewünschten γ-Fe₂O₃-haltigen Schicht oxidiert werden.

Die farblosen oder selektiv absorbierenden Metalloxidschichten (D) werden beim erfindungsgemäßen Verfahren im allgemeinen nach dem CVD-Verfahren durch Oxidation der Metallcarbonyle (z.B. Eisenpentacarbonyl, Chromhexacarbonyl) bzw. durch Hydrolyse der Metallhalogenide oder -alkoholate (z.B. Silicium-, Titan-, Zirkontetrachlorid, Titan-, Zirkon-tretra-n- und -iso-propanolat) abgeschieden.

Die Schichten (D) können aber auch naßchemisch aufgebracht werden. Diese Vorgehensweise ist insbesondere bei solchen Schichten (D) vorzuziehen, die wie die erfindungsgemäßen Schichten (B) im wesentlichen aus Siliciumoxid, Siliciumoxidhydrat, Aluminiumoxid und/oder Aluminiumoxidhydrat bestehen sollen.

Bei dieser erfindungsgemäßen naßchemischen Methode werden organische Silicium- und/oder Aluminiumverbindungen, bei denen die organischen Reste über Sauerstoffatome an die Metalle gebunden sind, in Gegenwart eines organischen Lösungsmittels und der zu belegenden Substratteilchen hydrolysiert.

Als organische Lösungsmittel eignen sich hierfür sowohl aprotische Lösungsmittel wie Ketone, β-Diketone, Ether, vor allem cyclische Ether, und stickstoffhaltige Lösungsmittel, z.B. auch amidische Lösungsmittel, als auch protische Lösungsmittel wie ein- oder mehrwertige Alkohole mit vorzugsweise 1 bis 6 Kohlenstoffatomen, die mit Wasser mischbar sind.

Beispiele für bevorzugte Lösungsmittel sind Aceton, Tetrahydrofuran, Ethanol und n- und iso-Propanol sowie Diethylketon, Acetylaceton, Dioxan, Trioxan, Ethylenglykol, Propylenglykol, Glycerin, Dimethylformamid, Dimethylacetamid, N-Methylpyrrolidon, Pyridin und Acetonitril.

Als metallhaltige Ausgangsverbindungen sind in den genannten organischen Lösungsmitteln lösliche organische Verbindungen, bei denen die organischen Reste über Sauerstoffatome an die Metalle gebunden sind, geeignet. Bevorzugte Beispiele sind die Acetylacetonate und insbesondere Alkoholate, vor allem C₁-C₄-Alkanolate, z.B. Aluminiumtriisopropanolat und Tetraethoxysilan.

Die Hydrolyse wird vorzugsweise in Gegenwart einer Base oder einer Säure als Katalysator durchgeführt. Hierfür eignen sich z.B. neben Alkalilaugen wie Natronlauge insbesondere wäßrige Ammoniaklösungen. Geeignete saure Katalysatoren sind beispielsweise Phosphorsäure und organische Säuren wie Essigsäure und Oxalsäure.

Wasser sollte mindestens in der stöchiometrisch für die Hydrolyse erforderlichen Menge vorliegen, bevorzugt ist jedoch die 2 bis 100fache, insbesondere die 5 bis 20fache Menge.

Bezogen auf die eingesetzte Wassermenge, gibt man in der Regel 3 bis 40 Vol.-%, vorzugsweise 5 bis 30 Vol.-%, einer 25 gew.-%igen wäßrigen Ammoniaklösung zu.

Für die Temperaturführung hat es sich als vorteilhaft erwiesen, das Reaktionsgemisch innerhalb von 10 bis 48 h schrittweise auf Rückflußtemperatur zu erhitzen. Bei Verwendung von Isopropanol als Lösungsmittel rührt man das Gemisch zum Beispiel bevorzugt zunächst 4 bis 20 h bei 40°C, dann 4 bis 20 h bei 60°C und zum Schluß 2 bis 8 h bei 80°C.

Verfahrenstechnisch geht man zur Aufbringung der Schicht (B) zweckmäßigerweise wie folgt vor:

Man legt die mit der ferromagnetischen Schicht (A) belegten Substratteilchen, organisches Lösungsmittel, Wasser und Katalysator (Base oder Säure) vor und gibt die zu hydrolysierende Metallverbindung, pur oder gelöst, z.B. als 30 bis 70, bevorzugt 40 bis 60 vol.-%ige Lösung im organischen Lösungsmittel, zu. Erfolgt die Zugabe der Metallverbindung in einem Schritt, dann wird die Suspension anschließend wie oben beschrieben unter Rühren erhitzt. Man kann die Metallverbindung aber auch bei erhöhter Temperatur kontinuierlich zudosieren, wobei das Wasser vorzugsweise nicht vorgelegt wird, sondern ebenfalls kontinuierlich zudosiert wird. Nach beendeter Beschichtung wird die Reaktionsmischung wieder auf Raumtemperatur abgekühlt.

Um eine Agglomeratbildung während des Beschichtungsvorgangs zu verhindern, kann die Suspension einer starken mechanischen Beanspruchung wie Pumpen, kräftigem Rühren oder Einwirken von Ultraschall unterzogen werden.

Gewünschtenfalls kann man den Beschichtungsschritt ein- oder mehrfach wiederholen. Sollte die Mutterlauge milchig trüb aussehen, so empfiehlt es sich, diese vor einer weiteren Beschichtung auszutauschen.

Die Isolierung der auf diese Weise zusätzlich mit der Schicht (B) belegten Substratteilchen kann in einfacher Weise durch Abfiltrieren, Waschen mit organischem Lösungsmittel, vorzugsweise den auch als Lösungsmittel verwendeten Alkoholen, und anschließendes Trocknen (üblicherweise 2 bis 24 h bei 20 bis 200°C) erfolgen.

Mit Hilfe des erfindungsgemäßen Verfahrens können auch dickere Siliciumoxidschichten von z.B. ≥ 70 nm problemlos in guter Qualität, d.h. als zusammenhängender, zur Interferenz befähigter Film, aufgebracht werden.

Je nach der Teilchengröße der verwendeten Substratteilchen werden in der Regel 10 bis 80 Gew.-% Metalloxid (B), bezogen auf das beschichtete Substrat, zur Erzielung der gewünschten Farbeffekte eingesetzt. So sind beispielsweise bei gröberen Aluminiumteilchen (um 1,5 m²/g) bereits bei etwa 15 Gew.-% Siliciumoxid und bei feineren Aluminiumteilchen (um 4,5 m²/g) ab etwa 30 Gew.-% Siliciumoxid attraktive Farbeffekte zu beobachten.

Die naßchemisch aufgebrachten Metalloxidschichten können in Abhängigkeit von der Vollständigkeit der an einen solchen Beschichtungsschritt anschließenden Trocknung noch geringe Mengen Wasser enthalten, die Metalloxide können also teilweise als Oxidhydrate vorliegen.

Mit Hilfe des erfindungsgemäßen Herstellungsverfahrens können die magnetisierbaren mehrfach beschichteten metallischen Glanzpigmente (und deren Mischungen mit silikatischen Pigmenten) in einfacher Weise in großen Mengen reproduzierbar hergestellt werden. Es werden vollständig umhüllte Pigmentteilchen mit hoher Qualität der einzelnen Beschichtungen erhalten.

Gewünschtenfalls können die beschichteten Glanzpigmente zur Desagglomerierung und Glättung einem zusätzlichen Veredelungsschritt durch schonendes Aufmahlen in einer Kugelmühle oder vergleichbaren Apparaten unterzogen werden.

Die erfindungsgemäßen magnetisierbaren Glanzpigmente und Glanzpigmentmischungen eignen sich vorteilhaft für viele Zwecke wie zur Einfärbung von Lacken, Druckfarben, Tinten, Kunststoffen, Gläsern, keramischen Produkten und Zubereitungen der dekorativen Kosmetik. Sie zeigen hohen Glanz und je nach Betrachtungs- und Beleuchtungswinkel verschiedene intensive Interferenzfarben und gutes Deckvermögen und sind aufgrund ihrer ferromagnetischen Eigenschaften, die bereits als solche ein detektierbares Sicherheitsmerkmal darstellen, insbesondere auch für spezielle Anwendungen, wie die Erzeugung von dreidimensionalen optischen Effekten durch die Einwirkung von Magnetfeldern während oder nach der Applikation im noch flüssigen Anwendungsmedium geeignet.

Insbesondere wenn für diese Ausrichtung Magnetfelder verwendet werden, deren Feldlinien in einem Bereich von etwa 1 bis 10 mm ihre Richtung nicht zu extrem ändern, sind die räumlichen optischen Effekte nicht nur von den üblichen Hell/Dunkel-Flops, sondern vorteilhaft auch von Farbwechseln zwischen den Interferenzfarben begleitet.

Als bevorzugte Anwendungszwecke für die erfindungsgemäßen Glanzpigmente seien besonders der Sicherheits- und Wertschriftendruck genannt, wo sie (z.B. auf Scheckkarten) kostspielige Hologramme ersetzen können.

Weiterhin lassen sich die erfindungsgemäßen Glanzpigmente auch vorteilhaft in Abmischung mit transparenten und deckenden Weiß-, Bunt- und Schwarzpigmenten sowie auch herkömmlichen Glanzpigmenten auf der Basis von metalloxidbeschichteten Glimmer- und Metallpigmenten und plättchenförmigen Eisenoxiden verwenden.

### Beispiele

### Herstellung und Anwendung eines erfindungsgemäßen Glanzpigments

### Beispiel 1

a) In einem Wirbelschichtreaktor (beschrieben in der EP-A-571 836) wurden 600 g entfettetes Aluminiumpulver (BET-Oberfläche 1,5 m²/g, mittlerer Teilchendurchmesser etwa 60 µm) unter Fluidisierung mit insgesamt 2300 l/h Stickstoff auf 200°C erhitzt. Ein kleiner Teil der Wirbelgase (400 l/h Stickstoff) wurde über eine auf 20°C temperierte Vorlage mit Eisenpentacarbonyl geleitet. In 10 h wurden so 145 g Fe(CO)₅ in den Reaktor überführt und dort zu sich auf den Aluminiumteilchen filmartig abscheidenem Eisen sowie Kohlenmonoxid zersetzt.
   Nach beendeter Eisenabscheidung wurde den Wirbelgasen während des Abkühlens zur Passivierung der Eisenoberfläche etwas Luft zugesetzt.
   Das beschichtete Aluminiumpulver hatte einen Eisengehalt von 6,3 Gew.-%.
b) 150 g des eisenbeschichteten Aluminiumpulvers wurden anschließend in einem mit Rückflußkühler und Rührapparatur versehenen Rundkolben in 2 l Isopropanol aufgeschlämmt. Nach Zugabe von 136 g Tetraethoxysilan, 100 ml Wasser und 30 ml einer 25 gew.-%igen wäßrigen Ammoniaklösung wurde die Suspension unter Rühren auf 40°C erwärmt. Nach 6 h wurden weitere 408 g Tetraethoxysilan und 150 ml Wasser innerhalb von 10 h zudosiert. Anschließend wurde die Suspension noch 10 h bei 50°C gerührt.
   Nach Abkühlen der Suspension wurde das Produkt von der Mutterlauge abfiltriert, mit Isopropanol gewaschen und getrocknet.
   Das zweifach beschichtete Aluminiumpulver hatte einen SiO₂-Gehalt von 20,7 Gew.-% und einen Eisengehalt von 3,0 Gew.-%.
c) 200 g des zweifach beschichteten Aluminiumpulvers wurden dann im Wirbelschichtreaktor unter Fluidisierung mit 1000 l/h Stickstoff auf 210°C erhitzt. Aus einer auf 70°C erwärmten Vorlage wurden mit einem Stickstoffstrom von 400 l/h 20 g Molybdänhexacarbonyl in 5 h in den Reaktor überführt, wo sie zu Molybdän und Kohlenmonoxid zersetzt wurden.
   Nach beendeter Molybdänabscheidung wurde den Wirbelgasen zur Passivierung der Molybdänoberfläche etwas Luft zugesetzt.

Das erhaltene Pigment hatte einen Molybdängehalt von 3,3 Gew.-% und zeigte, im Lack appliziert, bei nahezu unverändert starkem metallischen Glanz eine kräftige, blaustichig rote Interferenzfarbe, die bei steileren Betrachtungswinkeln in ein kräftiges Grün abkippte.

Die Einarbeitung des Pigments in Lack erfolgte, indem 0,4 g des Pigments in 3,6 g eines Polyester-Mischlackes mit 21 Gew.-% Feststoffanteil eingerührt und 2 min im Red Devil dispergiert wurden. Mit einer Rakel (160 µm Naßfilmdicke) wurden auf schwarzweißem Karton und auf einer durchsichtigen Folie Abzüge des pigmentierten Lacks angefertigt.

Bei der Einwirkung eines Magnetfelds auf die noch feuchten Lackierungen orientierten sich die Pigmentplättchen entlang der Feldlinien. Im getrockneten Lack ergaben sich auf diese Weise dreidimensionale Strukturen, die zusätzlich zu den üblichen Hell/Dunkel-Effekten rote und grüne Farbzonen aufwiesen.

Das erhaltene Pigment hatte folgende Magnetwerte: Sättigungsmagnetisierung Mₛ = 2,6 nTm³/g, Remanenz Mᵣ = 0,2 nTm³/g, Koerzitivfeldstärke H_{c} = 9,5 kA/m.

### Beispiel 2

a) Analog Beispiel 1a) wurden 60 g entfettetes Aluminiumpulver (BET-Oberfläche 4,5 m²/g, mittlerer Teilchendurchmesser 20 µm) in einem baugleichen, aber etwas kleiner ausgelegten Wirbelschichtreaktor (Innendurchmesser 8 cm) unter Fluidisierung mit insgesamt 600 l/h Stickstoff und Verwendung von 40 g Eisenpentacarbonyl, die mit einem Teilstrom von 100 l/h Stickstoff in 8 h in den Reaktor überführt wurden, mit Eisen beschichtet.
   Das beschichtete Aluminiumpulver hatte einen Eisengehalt von 15,2 Gew.-%.
b) Das eisenbeschichtete Aluminiumpulver wurde anschließend analog Beispiel 1b) mit SiO₂ beschichtet. Dazu wurde es in 900 ml Isopropanol aufgeschlämmt und unter Rühren mit 200 ml Wasser und 20 ml der Ammoniaklösung versetzt. Dann wurde die Suspension auf 60°C erhitzt und gleichzeitig mit der Zudosierung einer Lösung von 425 g Tetraethoxysilan in 500 ml Isopropanol begonnen (Dosiergeschwindigkeit etwa 100 ml/h). Nach einer Nachrührzeit von 10 h bei 60°C wurde das Produkt wie in Beispiel 1b) isoliert.
   Das zweifach beschichtete Aluminiumpulver hatte einen SiO₂-Gehalt von 63,1 Gew.-% und einen Eisengehalt von 5,6 Gew.-%.
c) Das zweifach beschichtete Aluminiumpulver wurde dann analog zu Beispiel 1c) unter Fluidisierung mit 900 l/h Stickstoff und Verwendung von 27 g Molybdänhexacarbonyl in 8 h mit Molybdän beschichtet.

Das erhaltene Pigment hatte einen Molybdängehalt von 4,4 Gew.-% und zeigte, im Lack appliziert, eine kräftige, grüne Interferenzfarbe, die bei steileren Betrachtungswinkeln nach violett abkippte.

Durch Einwirken eines Magnetfeldes wurden Lackierungen mit dreidimensional wirkenden Strukturen erhalten, die zusätzlich zu den üblichen Hell/Dunkel-Effekten grüne und violette Farbzonen zeigten.

Die Magnetwerte des erhaltenen Pigments betrugen: Mₛ = 3,5 nTm³/g Mᵣ = 0,3 nTm³/g, H_{c} = 8,5 kA/m.

## Patentansprüche

1. Magnetisierbare Glanzpigmente auf der Basis von mehrfach beschichteten plättchenförmigen nichtferromagnetischen metallischen Substraten mit
A) einer ersten, ferromagnetischen Schicht, die Eisen, Cobalt, Nickel, Magnetit und/oder γ-Fe₂O₃ enthält,
B) einer zweiten, im wesentlichen aus Siliciumoxid, Siliciumoxidhydrat, Aluminiumoxid und/oder Aluminiumoxidhydrat bestehenden Schicht,
C) einer dritten, im wesentlichen aus Metall und/oder nichtselektiv absorbierendem Metalloxid bestehenden Schicht und
D) gewünschtenfalls einer vierten, im wesentlichen aus farblosem oder selektiv absorbierendem Metalloxid bestehenden Schicht.

2. Glanzpigmente nach Anspruch 1, bei denen die Schicht (C) im wesentlichen aus Chrom, Molybdän, Wolfram, Eisen, Cobalt, Nickel, Silber, Kupfer, Gold, Palladium, Platin, Nickel-, Cobalt-, Silber/Gold-Legierungen, Magnetit, Nickeloxid, Cobaltoxid und/oder Vanadiumoxid besteht.

3. Glanzpigmente nach Anspruch 1 oder 2, bei denen die Schicht (D) im wesentlichen aus Siliciumoxid, Siliciumoxidhydrat, Aluminiumoxid, Aluminiumoxidhydrat, Titanoxid, Zirkonoxid, Chromoxid und/oder Eisenoxid besteht.

4. Glanzpigmente nach den Ansprüchen 1 bis 3, bei denen das metallische Substrat im wesentlichen aus Aluminiumplättchen besteht.

5. Glanzpigmente nach Anspruch 1 im wesentlichen aus Aluminium bestehenden, plättchenförmigen Substraten mit
A) einer ersten, 10 bis 500 nm dicken, im wesentlichen aus Eisen und/oder Magnetit bestehenden Schicht,
B) einer zweiten, 50 bis 600 nm dicken, im wesentlichen aus Siliciumoxid und/oder Siliciumoxidhydrat bestehenden Schicht,
C) einer dritten, 1 bis 25 nm dicken, im wesentlichen aus Molybdän, Chrom, Wolfram und/oder Eisen bestehenden Schicht und
D) gewünschtenfalls einer vierten, 5 bis 250 nm dicken, im wesentlichen aus Siliciumoxid, Siliciumoxidhydrat, Aluminiumoxid und/oder Aluminiumoxidhydrat bestehenden Schicht.

6. Glanzpigmentmischungen aus
I) den Glanzpigmenten gemäß den Ansprüchen 1 bis 5 und
II) mehrfach beschichteten silikatischen Plättchen, die mit einer inneren, farblosen oder selektiv absorbierenden Metalloxidschicht belegt sind und
A') eine ferromagnetische Schicht, die Eisen, Cobalt, Nickel, Magnetit und/oder γ-Fe₂O₃ enthält, und
B') gewünschtenfalls eine im wesentlichen aus farblosem oder selektiv absorbierendem Metalloxid bestehende Schicht
aufweisen, als wesentlichen Komponenten.

7. Verfahren zur Herstellung von Glanzpigmenten gemäß den Ansprüchen 1 bis 5, dadurch gekennzeichnet, daß man die metallischen Substratteilchen nacheinander mit den einzelnen Schichten belegt,
wobei man
die im wesentlichen metallischen Schichten ((A) und/oder (C)) durch Gasphasenzersetzung flüchtiger Metallverbindungen in einer inerten Atmosphäre oder durch stromlose, naßchemische Metallabscheidung und gegebenenfalls anschließende Trocknung,
die im wesentlichen aus Siliciumoxid, Siliciumoxidhydrat, Aluminiumoxid und/oder Aluminiumoxidhydrat bestehenden Schichten (B) durch hydrolytische Zersetzung von organischen Silicium- und/oder Aluminiumverbindungen, bei denen die organischen Reste über Sauerstoffatome an die Metalle gebunden sind, in Gegenwart eines organischen Lösungsmittels, in welchem die Metallverbindungen löslich sind, und gegebenenfalls anschließende Trocknung,
die im wesentlichen aus nichtselektiv absorbierendem Metalloxid bestehenden Schichten ((A) und/oder (C)) durch Gasphasenzersetzung flüchtiger Metallverbindungen in Gegenwart von Sauerstoff und/oder Wasserdampf,
die im wesentlichen aus γ-Fe₂O₃ bestehenden Schichten (A) durch Gasphasenzersetzung von Eisencarbonyl in Gegenwart von Wasserdampf und/oder Sauerstoff unter Bildung einer im wesentlichen Magnetit enthaltenden Schicht und anschließendes Erhitzen in einer oxidierenden Atmosphäre oder durch Gasphasenzersetzung von Eisencarbonyl in Gegenwart von Sauerstoff und/oder Wasserdampf unter Bildung einer im wesentlichen α-Fe₂O₃ enthaltenden Schicht, deren Umwandlung in eine eisen(II)haltige Schicht durch Erhitzen in einer reduzierenden Atmosphäre und anschließendes Erhitzen in einer oxidierenden Atmosphäre und
die im wesentlichen aus farblosem oder selektiv absorbierendem Metalloxid bestehenden Schichten (D) durch Gasphasenzersetzung flüchtiger Metallverbindungen in Gegenwart von Sauerstoff und/oder Wasserdampf oder durch hydrolytische Zersetzung organischer Metallverbindungen, bei denen die organischen Reste über Sauerstoffatome an die Metalle gebunden sind, in Gegenwart eines organischen Lösungsmittels, in welchem die Metallverbindungen löslich sind, und anschließende Trocknung aufbringt.

8. Verfahren zur Einfärbung von Lacken, Druckfarben, Tinten, Kunststoffen, Gläsern, keramischen Produkten und Zubereitungen der dekorativen Kosmetik, dadurch gekennzeichnet, daß man hierfür die Glanzpigmente gemäß den Ansprüchen 1 bis 6 verwendet.

9. Verfahren nach Anspruch 8, dadurch gekennzeichnet, daß man die Glanzpigmente während oder nach der Applikation im noch flüssigen Anwendungsmedium einem Magnetfeld aussetzt.

10. Verfahren nach Anspruch 8 oder 9, dadurch gekennzeichnet, daß man es im Sicherheitsdruck zur Erzeugung von 3D-Effekten anwendet.

## Claims

1. A magnetizable luster pigment based on multiply coated lamellar nonferromagnetic metallic substrates having
A) a first, ferromagnetic layer which contains iron, cobalt, nickel, magnetite or γ-Fe₂O₃,
B) a second layer consisting essentially of silica, hydrated silica, alumina or hydrated alumina,
C) a third layer consisting essentially of metal or non-selectively absorbing metal oxide and
D) if desired, a fourth layer consisting essentially of colorless or selectively absorbing metal oxide.

2. A luster pigment as claimed in claim 1, wherein layer (C) consists essentially of chromium, molybdenum, tungsten, iron, cobalt, nickel, silver, copper, gold, palladium, platinum, nickel alloys, cobalt alloys, silver/gold alloys, magnetite, nickel oxide, cobalt oxide or vanadium oxide.

3. A luster pigment as claimed in claim 1 or 2, wherein layer (D) consists essentially of silica, hydrated silica, alumina, hydrated alumina, titanium oxide, zirconium oxide, chromium oxide or iron oxide.

4. A luster pigment as claimed in any of claims 1 to 3, wherein the metallic substrate consists essentially of aluminum lamellae.

5. A luster pigment as claimed in claim 1, based on a lamellar substrate consisting essentially of aluminum and having
A) a first, from 10 to 500 nm thick layer consisting essentially of iron or magnetite,
B) a second, from 50 to 600 nm thick layer consisting essentially of silica or hydrated silica,
C) a third, from 1 to 25 nm thick layer consisting essentially of molybdenum, chromium, tungsten or iron and
D) if desired, a fourth, from 5 to 250 nm thick layer consisting essentially of silica, hydrated silica, alumina or hydrated alumina.

6. A luster pigment mixture comprising
I) a luster pigment as claimed in any of claims 1 to 5 and
II) multiply coated silicate lamellae which are coated with an inner, colorless or selectively absorbing metal oxide layer and have
A') a ferromagnetic layer which contains iron, cobalt, nickel, magnetite or γ-Fe₂O₃ and
B') if desired, a layer consisting essentially of colorless or selectively absorbing metal oxide
as essential components.

7. A process for the preparation of a luster pigment as claimed in any of claims 1 to 5, which comprises coating the metallic substrate particles in succession with the individual layers,
the essentially metallic layers ((A) or (C)) being applied by gas-phase decomposition of volatile metal compounds in an inert atmosphere or by currentless, wet-chemical metal deposition and, if required, subsequent drying,
the layers (B) consisting essentially of silica, hydrated silica, alumina or hydrated alumina being applied by hydrolytic decomposition of organic silicon or aluminum compounds in which the organic radicals are bonded to the metals via oxygen atoms, in the presence of an organic solvent in which the metal compounds are soluble, and, if required, subsequent drying,
the layers ((A) or (C)) consisting essentially of nonselectively absorbing metal oxide being applied by gas-phase decomposition of volatile metal compounds in the presence of oxygen or steam,
the layers (A) consisting essentially of γ-Fe₂O₃ being applied by gas-phase decomposition of iron carbonyl in the presence of steam or oxygen with formation of a layer containing essentially magnetite and subsequent heating in an oxidizing atmosphere or by gas-phase decomposition of iron carbonyl in the presence of oxygen or steam with formation of a layer containing essentially α-Fe₂O₃, conversion of said layer into an iron(II)-containing layer by heating in a reducing atmosphere and subsequent heating in an oxidizing atmosphere and
the layers (D) consisting essentially of colorless or selectively absorbing metal oxide being applied by gas-phase decomposition of volatile metal compounds in the presence of oxygen or steam or by hydrolytic decomposition of organic metal compounds in which the organic radicals are bonded to the metals via oxygen atoms, in the presence of an organic solvent in which the metal compounds are soluble, and subsequent drying.

8. A method for coloring finishes, printing inks, inks, plastics, glasses, ceramic products and decorative cosmetic formulations, wherein a luster pigment as claimed in any of claims 1 to 6 is used for this purpose.

9. A method as claimed in claim 8, wherein the luster pigment is exposed to a magnetic field during or after application in the still liquid application medium.

10. A method as claimed in claim 8 or 9, which is used in security printing for producing 3D effects.

## Revendications

1. Pigments brillants magnétisables à base de substrats métalliques non-ferromagnétiques en forme de plaquettes et à revêtements multiples avec
A) une première couche ferromagnétique contenant du fer, du cobalt, du nickel, de la magnétite et/ou du γ-Fe₂O₃,
B) une deuxième couche constituée pour l'essentiel d'oxyde de silicium, d'oxyde de silicium hydraté, d'oxyde d'aluminium et/ou d'oxyde d'aluminium hydraté,
C) une troisième couche constituée pour l'essentiel de métal et/ou d'oxyde métallique n'absorbant pas de façon sélective et
D) éventuellement, une quatrième couche constituée pour l'essentiel d'oxyde métallique incolore ou absorbant de façon sélective.

2. Pigments brillants selon la revendication 1, dans lesquels la couche (C) est constituée, pour l'essentiel, de chrome, de molybdène, de tungstène, de fer, de cobalt, de nickel, d'argent, de cuivre, d'or, de palladium, de platine, d'alliages de nickel, d'alliages de cobalt, d'alliages argent/or, de magnétite, d'oxyde de nickel, d'oxyde de cobalt et/ou d'oxyde de vanadium.

3. Pigments brillants selon la revendication 1 ou 2, dans lesquels la couche (D) est constituée, pour l'essentiel, d'oxyde de silicium, d'oxyde de silicium hydraté, d'oxyde d'aluminium, d'oxyde d'aluminium hydraté, d'oxyde de titane, d'oxyde de zirconium, d'oxyde de chrome et/ou d'oxyde de fer.

4. Pigments brillants selon l'une quelconque des revendications 1 à 3, dans lesquels le substrat métallique est essentiellement constitué de plaquettes d'aluminium.

5. Pigments brillants selon la revendication 1 à base de substrats en forme de plaquettes constitués pour l'essentiel d'aluminium avec
A) une première couche épaisse de 10-500 nm, constituée pour l'essentiel de fer et/ou de magnétite,
B) une deuxième couche épaisse de 50-600 nm, constituée pour l'essentiel d'oxyde de silicium et/ou d'oxyde de silicium hydraté,
C) une troisième couche épaisse de 1-25 nm, constituée pour l'essentiel de molybdène, de chrome, de tungstène et/ou de fer et
D) éventuellement, une quatrième couche épaisse de 5-250 nm, constituée pour l'essentiel d'oxyde de silicium, d'oxyde de silicium hydraté, d'oxyde d'aluminium et/ou d'oxyde d'aluminium hydraté.

6. Mélanges de pigments brillants formés à partir
I) des pigments brillants selon l'une quelconque des revendications 1 à 5 et
II) de plaquettes silicatées à revêtements multiples qui sont recouvertes d'une couche interne d'oxyde métallique incolore ou absorbant de façon sélective et qui comprennent en tant que composants essentiels
A') une couche ferromagnétique contenant du fer, du cobalt, du nickel, de la magnétite et/ou du γ-Fe₂O₃, et
B') éventuellement, une couche constituée, pour l'essentiel, d'un oxyde métallique incolore ou absorbant de façon sélective.

7. Procédé de préparation de pigments brillants selon l'une quelconque des revendications 1 à 5, caractérisé en ce que l'on recouvre les particules de substrat métallique, l'une après l'autre, avec chacune des couches, où l'on dépose
les couches essentiellement métalliques ((A) et/ou (C)) par décomposition en phase gazeuse de composés métalliques volatils dans une atmosphère inerte ou bien par précipitation de métal par voie chimique humide, sans courant électrique, éventuellement suivie d'un séchage,
les couches (B) constituées essentiellement d'oxyde de silicium, d'oxyde de silicium hydraté, d'oxyde d'aluminium et/ou d'oxyde d'aluminium hydraté, par décomposition par hydrolyse de composés organiques du silicium et/ou de l'aluminium, dans lesquels les restes organiques sont liés aux métaux par des atomes d'oxygène, en présence d'un solvant organique dans lequel les composés métalliques sont solubles, suivie éventuellement d'un séchage,
les couches constituées essentiellement d'oxyde métallique n'absorbant pas de façon sélective ((A) et/ou (C)) par décomposition en phase gazeuse de composés métalliques volatils en présence d'oxygène et/ou de vapeur d'eau,
les couches (A) constituées essentiellement de γ-Fe₂O₃ par décomposition en phase gazeuse de fer-carbonyle en présence de vapeur d'eau et/ou d'oxygène pour former une couche contenant essentiellement de la magnétite, puis par chauffage dans une atmosphère oxydante, ou bien par décomposition en phase gazeuse de fer-carbonyle en présence d'oxygène et/ou de vapeur d'eau pour former une couche contenant essentiellement du α-Fe₂O₃, qu'on transforme en une couche contenant du Fer (II) par chauffage dans une atmosphère réductrice suivi d'un chauffage dans une atmosphère oxydante et les couches (D) constituées essentiellement d'oxyde métallique incolore ou absorbant de façon sélective, par décomposition en phase gazeuse de composés métalliques volatils en présence d'oxygène et/ou de vapeur d'eau ou bien par décomposition par hydrolyse de composés métalliques organiques, dans lesquels les restes organiques sont liés aux métaux par des atomes d'oxygène, en présence d'un solvant organique dans lequel les composés métalliques sont solubles, suivie d'un séchage.

8. Procédé de coloration de vernis, d'encre d'imprimerie, d'encre, de matières plastiques, de verres, de produits céramiques et de compositions cosmétiques, caractérisé en ce que l'on utilise des pigments brillants selon l'une quelconque des revendications 1 à 6.

9. Procédé selon la revendication 8, caractérisé en ce que l'on soumet les pigments brillants à un champ magnétique pendant ou après leur application dans le milieu d'utilisation encore liquide.

10. Procédé selon la revendication 8 ou 9, caractérisé en ce qu'on l'utilise dans une encre de sécurité pour obtenir des effets 3D.
